# EUROPEAN PATENT APPLICATION

(11) **EP 1 250 021 A1**
(43) Date of publication of application: **16.10.2002**
(21) Application number: 01303317.0
(22) Date of filing: 09.04.2001
(51) Int. Cl.: H04Q 7/38

(54) **Providing quality of service in telecommunications systems such as UMTS or other third generation systems**

(71) Applicant: LUCENT TECHNOLOGIES INC., Murray Hill, New Jersey 07974-0636 (US)
(72) Inventor: Chen, Xiaobao, Swindon, Wiltshire SN5 5DQ (GB); Richards, Derek, Mersey, Swindon, Wiltshire SN6 6LL (GB)
(74) Representative: Sarup, David Alexander

(57) **Abstract**

In a telecommunications network, a method is provided of transmitting a data stream from a user's terminal in a first service domain to an end point in a second service domain. The data stream is transmitted according to procedures selected o as to provide the first user with a predetermined quality of service. The quality of service is determined dependent upon the terms of the service level agreement between the user and the first service domain, and service level agreements between service domains through which the data stream passes to reach the end point.

## Description

### Background

The present invention relates to a method of transmitting a data stream in a telecommunications system, and to a corresponding telecommunications network.

Mobile radio systems like the Global System for Mobile communications (GSM) have been used mostly for mobile telephony. However, the use of mobile data applications like facsimile transmission and short message exchange is becoming more popular. New data applications include wireless personal computers and, mobile offices. These applications are characterized by "bursty" traffic. In other words, a relatively large amount of data is transmitted over a relatively short time interval followed by significant time intervals when little or no data is transmitted. New 3G (so-called third generation) mobile radio systems are being developed such as UMTS (Universal Mobile Telecommunications Standard) with higher bit rate for better handling of large amounts of bursty data as well as those services that require high bandwidth such as audio/video and multimedia services.

In bursty traffic situations, packet-switched communications mechanisms better utilize the transmission medium than circuit-switched mechanisms. In a packet-switched network, the transmission medium is used only on demand, and a single physical channel can be shared by many users. Another advantage is that in contrast to time-oriented charging applied for circuit-switched connections, packet-switched data services allow charging depending on the amount of data transmission and on the quality of service of that transmission.

Quality of service (QoS) corresponds to the goodness (quality) with which a certain operation (service) is performed. Certain services like multimedia applications or a simple phone call need guarantees about accuracy, dependability, and speed of transmission. Typically, in data communications, "best efforts" are employed, and no special attention is paid to delay or throughput guarantees. Quantitative parameters in considering quality of service may include throughput (such as the average data rate or peak data rate), reliability, delay, and jitter which means the variation delay between a minimum and maximum delay time that a message experiences.

Data telecommunication often involves transmission of messages from a sending user's terminal within a first network eg GSM, UMTS, Internet Protocol (IP) to a second different network where the receiving user's terminal resides often over yet further other network(s). The various networks deploy different QoS control mechanisms from each other. As a result of the variety of QoS control technologies and the resultant inconsistency of traffic transmission behaviour due to the usually unrelated changes and variations of network load and performance of each individual network, good end-to-end quality of service (QoS) control is complicated and hard to achieve.

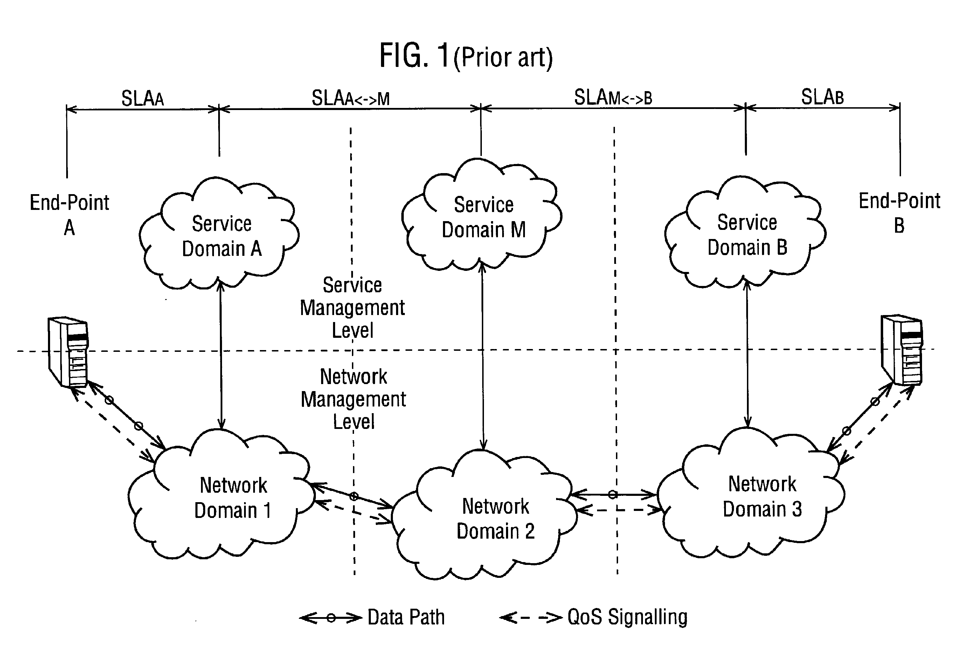

As illustrated in Figure 1, known approaches to QoS control have been to control and manage the resources and the traffic on the transport links or the network routing/switching layers in each individual network. An example is described in International Patent Publication WO99/05828. Such networks each deploy quality of service control mechanisms specific to that network or service domain such as DiffServ or IntServ network/domain. Then the inter-working function between different networks, in particular, between different QoS control and management mechanisms need to be worked out so as to achieve the desired end-to-end QoS quality control. This is both ad-hoc and difficult.

In addition, the co-ordination or inter-working between two adjacent networks on the end-to-end path has been largely focused on the solutions-per-technology that could hardly be applied to other inter-working scenarios. Furthermore it is often difficult for service providers to decide how to differentiate or discriminate between users and/or between services i.e. provide data streams from /for different users or services with different quality of service, with all these different technologies openly "available" to the world.

### Statements of Invention

The present invention provides a method of transmitting a data stream in a telecommunications system from a user's terminal in a first service domain to an end point in a second service domain, the data stream being transmitted according to procedures selected so as to provide the first user with a predetermined quality of service, said quality of service being determined dependent upon the terms of the service level agreement between the user and the first service domain, and service level agreements between service domains through which the data stream passes to reach the end point.

This invention basically in its preferred embodiments achieves end-to-end QoS provisioning based on the vision of achieving the guarantees which all the relevant service level agreements provide. The basic concept is to provide the end-to-end QoS by taking the "top-to-bottom" approach. In this approach, end-to-end QoS is controlled and managed by enforcing service level agreements over networks and the transport bearers between them where the associated QoS resources are allocated and controlled accordingly. The achieved network performance can then be monitored against the requirements set by the SLA's and can be communicated back to the customers.

The present invention in its preferred embodiments incorporates service level agreements into the QoS resource management in UMTS and future networks infrastructures and provides end-to-end QoS. QoS Policies are identified to be the link between the SLA-based service level QoS policy management and the policy-based QoS provisioning and resource management at the transport bearers level.

The present invention in its preferred embodiments provides an end-to-end or "tunnel through" view of the performance and necessary constraints over all the networks involved in the end-to-end traffic path where a QoS guarantee is required.

Service level agreements can easily be defined using a library of standard terms understood by all service domains across the end-to-end traffic path and thus provides the basis for setting up end-to-end service provisioning, the required quality of service of which is supported by all the bearers across different network operators. Service level agreements also facilitate the provision of good quality services across different service domains run by different service providers.

Furthermore service level agreements provide an effective means for differentiating the service offered by one service provider from those of other service providers. As an example, Spring Communications Co. will guarantee network performance for its corporate Internet and Intranet Customers, setting a precedent for voluntary culpability among service providers. As a further example UUNet's SLA's include 100% availability guarantees, average monthly latency of no more than 85 milliseconds roundtrip within UUNet's backbone, and notifications when SLA's are violated.

Furthermore SLA's ensure that customers have a clear understanding of QoS expectations and the associated costs. The ability to measure and manage service quality enables service providers to offer different classes of service. Still furthermore, SLA's facilitate the achievement of Policy-based QoS resource management.

Furthermore, SLA's facilitate a close association between the predefined service requirements and constraints on the performance of the networks and thus facilitate monitoring and reporting of the operational status of the network in terms of QoS control and service provisioning . Still furthermore, SLA's provides a useful tool for the network operators or service providers to control both their services and their networks. For example, it allows operations staff to prioritise diagnosis and problem resolution issues, such as re-allocating the QoS resources based on the penalties associated with the problems.

The present invention also provides a telecommunications network comprising a first service domain and a second service domain, the first service domain comprising a user's terminal and the second service domain comprising a transmission end point, each service domain comprising a quality of service controller operative to transmit a data stream from the user's terminal to the end point with a predetermined quality of service, said quality of service being determined by the controller dependent upon the terms of a service level agreement between the user and the first service domain and the service level agreements between service domains through which the data stream passes to reach the end point.

### Brief Description of the Drawings

A preferred embodiment of the present invention will now be described by way of example and with reference to the Figures in which:
Figure 1 is a diagram illustrating the prior art approach to provision of end-to-end quality of service (QoS),
Figure 2 is a diagram illustrating the mechanisms for end-to-end quality of service provision in a preferred embodiment of the present invention,
Figure 3 is a diagram illustrating in more detail the mechanisms of Quality of Service (QoS) control applied to each network domain, involving negotiation between network domains at service level agreement level,
Figure 4 is a diagram illustrating the hierarchical approach taken to ensure the predetermined levels of quality of service appropriate to particular uses or classes of users are realised by appropriate differentiations in resource allocation and traffic scheduling, i.e. discrimination between data packets to and/or from different users and/or different types of data e.g. voice, e-mail etc.,
Figure 5 is a diagrammatic example of the end-to-end quality of service which can be provided in consequence,
Figure 6 is a diagram illustrating how SLA's are translated into policies and how different types of quality of service policies are applied.

### Detailed Description of Preferred Embodiment(s)

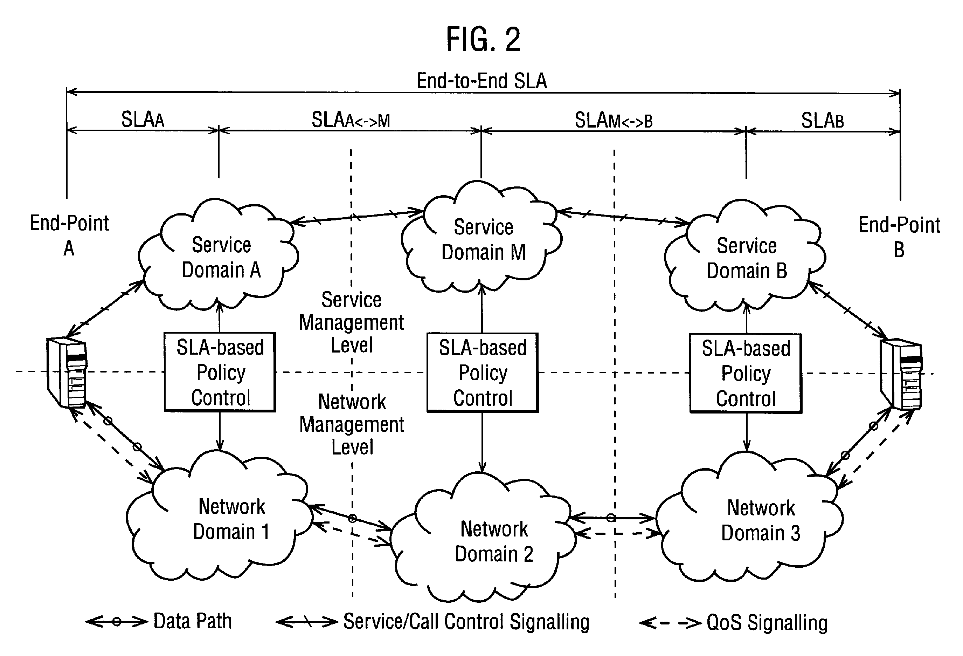

As shown in Figure 2, a first user (second end-point) denoted A has a service level agreement SLA_{A} which defines the quality of service which he will receive from his local service provider, denoted Service Domain A. In effect an End to End Service level agreement is provided to him which defines the QoS he can expect, not just from his local service provider A is control of Network domain 1, eg GSM, UMTS, Internet Protocol Networks, but also from all other service providers, A+1, A+2..., M, M+1,...B who handle his data stream to second user B (receiving end-point). The second user B has a service level agreement SLA_{B} with his local service provider, denoted Service Domain B as well as a similar End to End Service Level Agreement.

### Service Level Agreements and End to End Service Level Agreements

Service Level Agreements provide a set of specifications on various aspects of services including the QoS specifications that are agreed by two communication peers such as an end terminal with its network and between two networks. Service Level agreements can also be between a user and its service providers/network operators and between service providers/network operators. There are two categories of SLA's:
Intra-Domain SLA: the SLA between a user/network terminal equipment and its service provider/network operator/networks.
Inter-Domain SLA: the SLA between two service providers/operators/networks.
As regards quality of service, service level agreements (SLA's) can define e.g. the minimum and maximum data rates which will be applied (throughput) and maximum call set-up time.
It can thus be seen that an end-to-end service level agreement is the set of Intra-domain SLA's and Inter-Domain SLA's between two end user's terminal equipment. It represents the agreed services and the associated qualities across all the networks/service domains between the two communication end points. In other words end-to-end SLA is managed as the concatenation of Intra-domain SLA's and Inter-domain SLA's. Each service domain bearers the legal responsibility (if required to do so by the end-to-end SLA) to guarantee the SLA's requirements in its own service domain.

### Quality of Service (QoS) Control at Network Management Level

At the Network Management Level, the provision of end-to-end quality of service is a consequence of quality of service (QoS) control in each network domain, e.g. A, ....M, ....and B, each of which is associated with its service domain A,...M,.... and B as shown in Figure 2.

### Intra-Domain QoS control:

QoS control and resource management in each network domain is performed by applying Policy-based QoS resource control and management where the policies are derived from SLA's to reflect the constraints over the performance of the network bearers, the corresponding cost and even the associated penalties that are defined in the Intra-domain SLA's.

### Inter-Domain QoS control:

To achieve end-to-end QoS and thus eventually meet the requirements of end-to-end SLA's, QoS inter-working between adjacent network domains is performed by applying the inter-domain QoS policies that are derived from the Inter-domain SLA's. The Inter-domain QoS Policies are the rules or the set of conditions that both peers are required to meet in terms of the authorisation, allocation, reservation and commitment of QoS resources as well as user traffic conditioning so as to meet the binding requirements that are defined by the corresponding inter-domain SLA.

### How End to End Quality of Service is Provided

Intra-and Inter-SLA's are specified, negotiated and finally agreed both between the users and their service providers and between service providers. the SLA's, The policies that govern the access and the control of the QoS resources in the network domains are derived from the intra- and inter-domains SLA's. The policy decisions are then enforced during the QoS management including resource access control (what traffic can access the network resources) and traffic handling and conditioning (what traffic gets through the network, what traffic get discarded if there is congestion and what traffic has special quality requirements that must be guaranteed beyond the level of traffic classes and priorities).

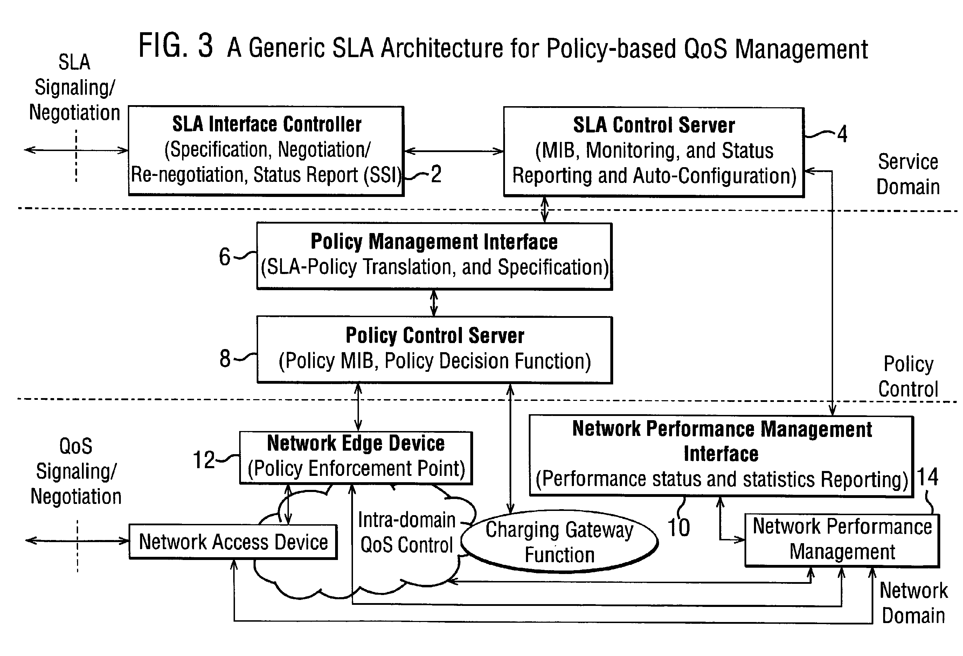

As shown in Figure 3, this structured approach to end-to-end quality of service provision involves an SLA Interface Controller 2 which interfaces with the end customers) or peer service provider(s) for specification, negotiation, contracting, and re-negotiation, requesting and reporting the status of intra-domain and inter-domain SLA's.

The SLA Control Server 4 serves as the information base for storing, managing, monitoring and authorising the access of SLA's. It interacts with the Policy Control Server 8 via the Policy Management Interface 6 to derive the policies per user or per service provider from the intra-domain SLA's. In the meantime, it also collects the statistics of the current achievable network performance via the Network Performance Management Interface 10.

The Policy Management Interface 6 provides the interpretation between Policies and the SLA's and checks consistency over the policy information.

The Policy Control Server 8 serves as the information base for storing and managing the policy information derived from the SLA's and the associated policy decisions which in turn are used to configure the Network Edge Devices 12 where the policy decisions are enforced including authorisation, allocation and reservation of resources and conditioning of the behaviour of information traffic so as to meet the requirements of QoS and hence the SLA's. It also performs the centralised consistency control (monitoring and adjustment) over the policy enforcement operations across all the edge network devices in the same service domain so as to guarantee unified packet delivery behaviour across the service domain.

The Network Performance Management Interface 6 provides the status and statistics report to the SLA Control Server 4.

The Network Performance Management 14 monitors, collects and stores the achieved network performance and accessed via the Network Management Interface 10 for network performance information, specifically reported to the SLA Control Server 4.

### SLA Negotiation/ Renegotiation

1) SLA negotiation is a point-to-point negotiation, i.e. it only happens specifically between a user and its service provider and between two peer service providers. Service providers may use the SDSP (Service Domain Selection Protocol).

Negotiation may take a request-response negotiation model where the SLA originator proposes the request and the SLA terminator responds by accepting, changing or rejecting the requested SLA's.

The SLA message exchange may be primarily of three-way handshake pattern where the final confirmation from the SLA originator may be optional which makes the SLA message exchange become two-way. Negotiation may be end-to-end, e.g including the aim of achievement of all the intra-domain and inter-domain SLA's between two end peers (user's or service domains). Alternatively, SLA's negotiation may be just between two adjacent service domains.

The aim of SLA negotiation or renegotiation is to provide a quality of service (QoS) in line with the end-to-end SLA, i.e. user's agreed expectations.

### Policies

As mentioned above, quality of service is ensured by each network or service domain implementing appropriate policies. Different levels of policies are provided.

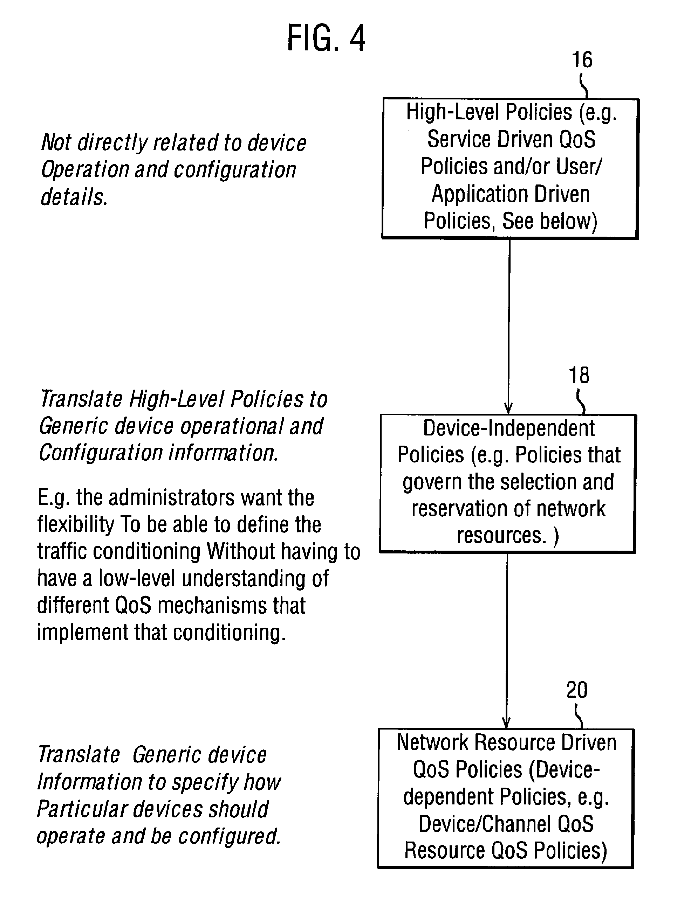

As shown in Figure 4, the High-level Policies 16 relate the operation and configuration needs of a device directly to the rules ensuring quality of service that the network administrator is seeking to implement in the network that the device belongs to. Device-independent policies 18 enable the devices from different vendors using the same QoS mechanisms to be controlled by applying the same and consistent policies. In contrast device-dependent policies 20 translate device independent policies into ones that are specific for a given device. By applying both device-independent and device-dependent policies together, devices of different capabilities can be controlled together by applying the same set of policies (or the control rules).

Device-independent policies 18 provide a common layer of abstraction for managing multiple devices of different capabilities, while device-dependent policies 20 implement the specific conditioning that is required on per-device basis.

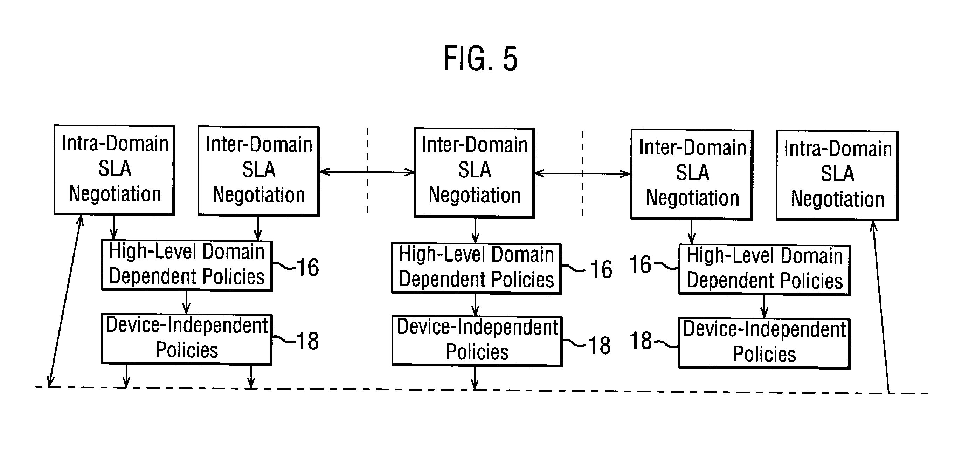

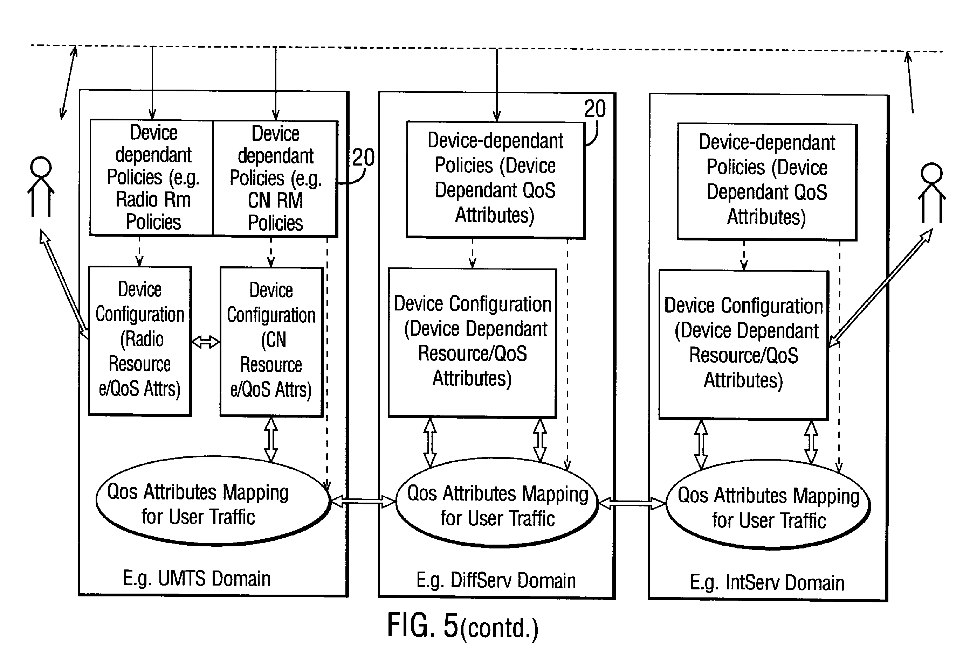

Figure 5 summarises how intra-SLA/inter-SLA the different levels of policies control and the Network Service Attributes/Classes are combined to achieve SLA-enabled Resource Management, and SLA-enabled QoS Inter-working so as to achieve SLA-based End-to-End QoS Provisioning.

The basic methodology is one of taking actions dependent on eg. the source address or destination address of packetised data. For example:
IDENTITY:: = "WHO and/or WHAT"; E.g. user ID, IP address, service types
IF :: "CONDITIONS = TRUE"; E.g. time/service/QoS constraints, violations, etc.
THEN :: "ACTIONS on WHERE"; E.g. allocate a X kbps bandwidth with no more than 25 ms delay in the service domain A/DiffServ Domain B/Device C.

Policy is essentially a matter of allocating resources. It is the translation between terms (SLA's) and the configuration details (resource allocations) necessary to produce those resource allocations that distinguishes policy management from configuration management.

Policy can be represented at different levels, ranging from high level quality of service goals to device-specific configuration parameters. Translation between different levels requires information, other than policy, such as network and host parameter configuration and capabilities.

Taking, as an example, a UMTS QoS Policy definition, firstly there is a high level abstraction such as the policies that define the service level agreements. For example. the UMTS QoS Policy is defined broadly as the administratively prescribed rules and the conditions that are used to govern the bilateral service access between different operators' domains, for example, by specifying that traffic from operator B's UMTS network domain to the local domain of operator A's can use up to 20% of the capacity of the operator A' total network links to the external networks, regardless of the specific services classes and their QoS requirements of the traffic from the operator B. This high level abstraction of UMTS QoS policy, in general, provides a rule for the UMTS resource access between different network operators.

On the other hand a QoS control policy can be low-level i.e. as specific as being applied to per-user or per-device. For example, a user QoS policy can set the resource access rule as that the traffic from User A running an application of Conversational QoS Class is entitled an DSCP value up to 7 and the maximum bit rate of 1.5 Mbps. This user-specific QoS control policy controls a user and/or an application's access right to the UMTS network resources within an operator's domain. A per-network device QoS Policy can define the queueing management policy to be that a system warning message is generated and sent to the QoS Policy Control Element (e.g. the Policy Decision Point) if the queue depth is filled up to 90% of the total length.

### Application of Policies

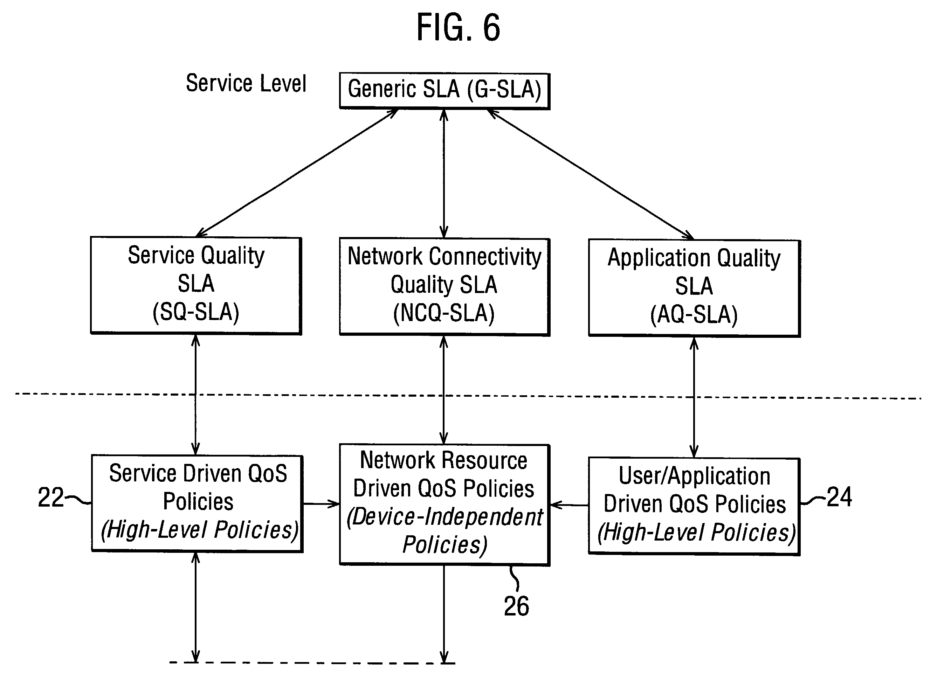

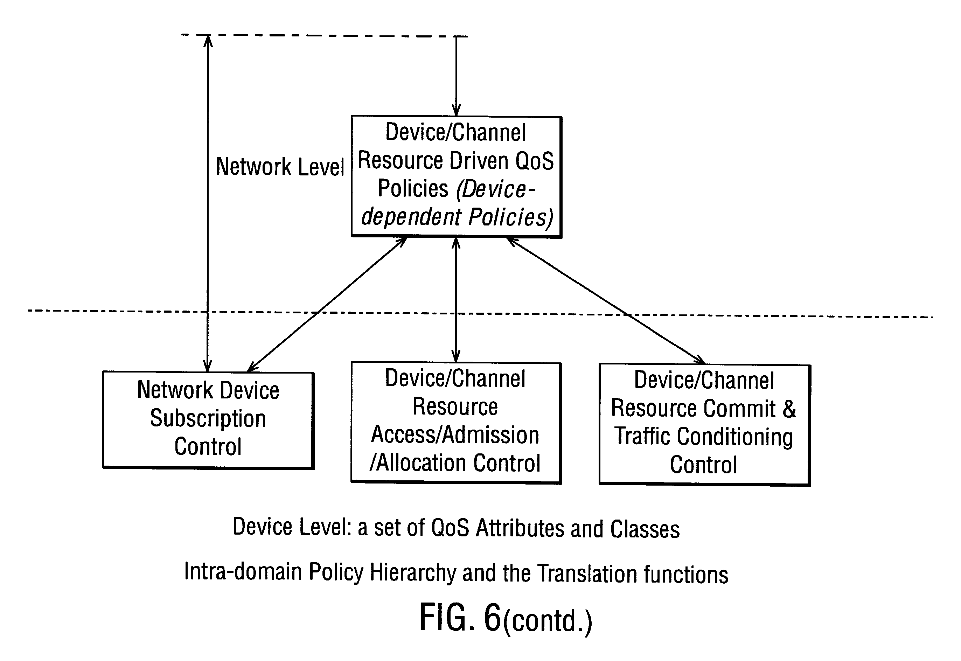

In a communications network, such as a UMTS system, as shown in Figure 6, three main levels of policy are defined namely Service Level, Network Level, and Device Level.

The QoS policies are enforced at the network management level in each network domain and between two adjacent network domains during the QoS control operations (e.g. admission control, resource allocation and reservation, traffic conditioning and scheduling, etc) so that the end-to-end QoS is provided as part of the satisfactory end-to-end SLA's.

At network level there are three main classes of policies relevant to providing quality of service. These are Service Drives QoS Policies 22, User/Application Drives QoS Policies 24, and Network Resource Drives QoS Policies 26, and are discussed in turn below:

### (1) Service Driven QoS Policies:

Service Driven QoS Policies are QoS Policies that are defined and enforced according to the QoS Service Classes Conversational, Streaming, Interactive and Background Classes) defined in TS23.107. A Service Driven QoS Policy applies to the resource reservation requests from all the users/applications that require the same QoS Class even when they are located in different operators' domains using different vendors' network equipment. A Service Driven QoS Policy can be subsequently derived from the Service Level Agreement (SLA) between the users and their service providers and between service providers. A resource reservation request that is governed by Service Driven QoS Policies is expected to be processed in the same way and, if it is accepted, achieve the same QoS delivery behaviour, regardless of the identity and location of the user and the different operational domains of operators.

Service Driven QoS Policies facilitate the achievement of consistent and unified end-to-end resource access and reservation control for the same type of services across different UMTS administrative domains. As an example, the Service Driven QoS Policies derived from the intra-domain SLA's or inter-domain SLAs between different Service Providers (SPs) decide that a user that intends to initiate a VolP call of the Conversational QoS Class should expect the same services and thus the consistent call quality when he roams to networks operated by different operators, unless the user is entitled for different levels of services, e.g. as a premium user in one operator's domain and an economy user in all other domains.

### (2) User/Application Driven QoS Policies:

User/Application Driven QoS Policies aim to differentiate the UMTS resource access, resource reservation and thus the level of QoS based on the identity of the user and/or the nature of an application. Users and their applications under different SLAs signed with their SP's are entitled for different QoS policies and thus will be treated differently in terms of the eligible resource reservation, the level of QoS and charging rates, etc. As an example, user A, if identified as an economy user in its SLA with its SP, is allowed Guaranteed Services only during the off-peak hours. It is only allowed Controlled Load Service or Best-Effort Service during the peak hours, regardless of its location and the nature of the applications (Conversational, Streaming, Interative and Background Services) it is running. An example for application driven QoS Policies is that all calls to the Tourist Information Office will be provided only Controlled Load Service during the off-peak hours and the Best-Effort Service during the peak hours.

User Driven and Application Driven QoS Policies can be combined to generate the appropriate QoS Policies in some application scenarios. Take the same user, A, in the above example. An emergency call from all users, including user A, shall be given the Guaranteed Services even during the peak hours.

### (3) Network Resource Driven QoS Policies:

Network Driven QoS Policies ref to the policies that decide the resource access, allocation and reservation, specifically, for Capacity and Call Admission Control, in each UMTS QoS network element including user equipment (UE) UMTS Terrestrial Rods Access Network C (UTRAN) the Edge Node serving GPRS support node (SGSN) and Gateway Node Gateway GPRSD support node (GGSN). The semantics of the Network Driven QoS Policies are network element dependent. For example, UTRAN inte4rprets and implements the QoS Policies based on radio specific resource access allocation and reservation requirements that are different from the QoS Policies implemented in the Core Network (SGSN/GGSN). In addition, different Network Driven QoS Policies mechanisms need to be implemented for different QoS frameworks and the QoS signaling such as the RSVP (Resource Reservation Protocol) IntServ and DiffServ that deploy different QoS control mechanisms.

For those network elements such as UTRAN/SGSN/GGSN that deploys DiffServ QoS model, the network edge node(s) and the core network node(s) are the two primary locations where the QoS Policies are applied. Specifically at the core network nodes, the main QoS Policies are those on accessing the resources (queue/class allocation) while at the edge nodes, the QoS Policies and for additional functionality such as flow classification, policing, RSVP message processing (mapping), remarking and billing, etc, should be taken into account.

As a simple example, a Network Driven QoS Policy for allocating the GTP tunnel between the SGSN and GGSN that deploy the DiffServ QoS Framework mandates that all user packets are marked with a DiffService Code Point (DSCP) value of no higher than 7 except for those packets for network control and management signaling.

In comparison, a QoS control Policy for an RSVP capable network element makes it imperative that any specific bandwidth reservation request as carried by the RSVP messages (e.g. RESV) shall not exceed the Maximum Bit Rate of 1500 kbps.

## Claims

1. A method of transmitting a data stream in a telecommunications system from a user's terminal in a first service domain to an end point in a second service domain,
the data stream being transmitted according to procedures selected so as to provide the first user with a predetermined quality of service,
said quality of service being determined dependent upon the terms of the service level agreement between the user and the first service domain, and service level agreements between service domains through which the data stream passes to reach the end point.

2. A method according to claim 1, in which each service domain has an associated network domain, at least one network domain being a UMTS or other Third Generation (3G) system.

3. A method according to claim 1 or claim 2 in which for a predetermined quality of service defined by a service level agreement a hierarchical set of policies are applied governing the timing, prioritisation and rate of transmission of data of said data stream.

4. A method according to any preceding claim in which the user's quality of service depends on the level of quality of service selected in the user's service level agreement.

5. A method according to any preceding claim, in which procedures for transmission of data of said data stream by the first service domain are selected dependent upon a process of negotiation between the user's terminal and first service domain as to be quality of service to be applied.

6. A method according to any preceding claim in which procedures for transmission s of data of said data stream by a service domain is selected dependent upon a process of negotiation between service domains as to the quality of service to be applied.

7. A telecommunications network comprising a first service domain and a second service domain, the first service domain comprising a user's terminal and the second service domain comprising a transmission end point,
each service domain comprising a quality of service controller operative to transmit a data stream from the user's terminal to the end point with a predetermined quality of service,
said quality of service being determined by the controller dependent upon the terms of a service level agreement between the user and the first service domain and the service level agreements between service domains through which the data stream passes to reach the end point.
